# EUROPEAN PATENT SPECIFICATION

(11) **EP 4 247 501 B1**
(45) Date of publication and mention of the grant of the patent: **28.01.2026**
(21) Application number: 21710022.1
(22) Date of filing: 16.02.2021
(51) Int. Cl.: A62C 3/07, A62C 3/16

(54) **AN EXTINGUISHING SYSTEM AND AN EXTINGUISHING METHOD**
LÖSCHSYSTEM UND LÖSCHVERFAHREN
SYSTÈME D'EXTINCTION ET PROCÉDÉ D'EXTINCTION

(30) Priority: 23.11.2020 FI 20206188
(43) Date of publication of application: 27.09.2023
(73) Proprietor: Firesea Equipment Oy, 00940 Helsinki (FI)
(72) Inventor: MATTILA, Ari, 00940 Helsinki (FI); JUNNILA, Veli-Matti, 00940 Helsinki (FI); NYPPELI, Jari, 00940 Helsinki (FI)
(74) Representative: Väänänen, Janne Kalervo
(86) International application number: PCT/FI2021/050108
(87) International publication number: WO 2022/106747

(56) References cited:
- DE-U1- 202020 103 375
- DE-U1- 202020 104 825

## Description

### Technical field

The disclosure relates generally to extinguishing technology. More particularly, the disclosure relates to an extinguishing system that can be used for extinguishing e.g. a fire in an electric or hybrid vehicle comprising a battery. Furthermore, the disclosure relates to an extinguishing method.

### Background

Over the last decade, development of electric and hybrid vehicles has significantly changed the car industry globally. The development has been mainly driven by the fast development of battery technology. However, a fire risk and hazard associated with high-energy batteries has become a significant safety concern for electric and hybrid vehicles. Thermal runaway or fire can occur as a result of extreme conditions that may be results of faulty operation. Failure of a battery may then be accompanied by release of toxic gases, fire, jet flames, and/or explosion. Extinguishing a fire on a battery of an electric or hybrid vehicle can be challenging because a burning battery inside a vehicle can be inaccessible to externally applied suppressant and can reignite without sufficient cooling. As a corollary, an excessive amount of suppression agent is needed to cool the battery, extinguish the fire, and prevent re-ignition. Thus, in many cases, there is a need to submerge a burning electric or hybrid vehicle into firefighting water in order to reliably extinguish the fire.

A process in which a burning electric or hybrid vehicle is submerged into water is typically carried out so that a sufficiently large pool containing a sufficient amount of water is brought in the vicinity of the electric or hybrid vehicle and thereafter the electric or hybrid vehicle is lifted with a suitable crane into the pool. The above-mentioned process can be however difficult, unless impossible, in a case in which a burning electric or hybrid vehicle is in a parking hall, in a ship, or in another place where room is limited so that it is challenging, unless impossible, to bring a sufficiently strong crane and a sufficiently large water pool near to a burning electric or hybrid vehicle.

Publication DE202020103375 describes an extinguishing container device comprising an extinguishing container for receiving a burning electric car and for extinguishing the electric car in the extinguishing container. The extinguishing container comprises a floor area for parking the burning electric car. The extinguishing container can be transferred with a transport vehicle which has a transport surface for parking the extinguishing container on a flat platform. The extinguishing container device is provided with a lifting device by means of which, on the one hand, its bottom surface is raised above the transport surface, and, on the other hand, its bottom surface can be lowered.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a planar or non-planar geometric surface, a geometric space, or any other geometric entity that is zero, one, two, or three dimensional.

In accordance with the invention, defined in claim 1, there is provided a new extinguishing system that comprises a wall section for surrounding an object on fire and a floor section connected to the wall section and for supporting the object on fire. The object can be for example an electric or hybrid vehicle, e.g. a car, that comprises a battery. The wall section and the floor section constitute a pool for containing firefighting water covering at least partly the object on fire. The wall section comprises a guillotine door configured to allow the object to enter the pool when the guillotine door is in an upper position and to seal the pool to be capable of containing the firefighting water when the guillotine door is in a lower position. Thus, the extinguishing system can be e.g. a part of fixed structures of for example a parking hall or a ship such that the extinguishing system does not disturb normal operations when the guillotine door is in its upper position. The guillotine door is straightforward to set into its lower position in which it seals the pool just by releasing the guillotine door to drop. Depending on a case, a parking hall as well as a ship may comprise a plurality of extinguishing systems according to the invention.

In accordance with the invention, defined in claim 6, there is provided also a new method for extinguishing fire of an object, e.g. an electric or hybrid vehicle, located in a pool constituted by a wall section surrounding the object and a floor section supporting the object. The method comprises:
- dropping a guillotine door of the wall section to a lower position of the guillotine door to seal the pool to be capable of containing firefighting water, and
- supplying firefighting water to the pool.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of figures

Exemplifying and non-limiting embodiments and their advantages are explained in greater detail below in the sense of examples and with reference to the accompanying drawings, in which:
figures 1a, 1b, and 1c illustrate an extinguishing system according to an exemplifying and non-limiting embodiment, and
figure 2 shows a flowchart of a method according to an exemplifying and non-limiting embodiment for extinguishing a fire in an object.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

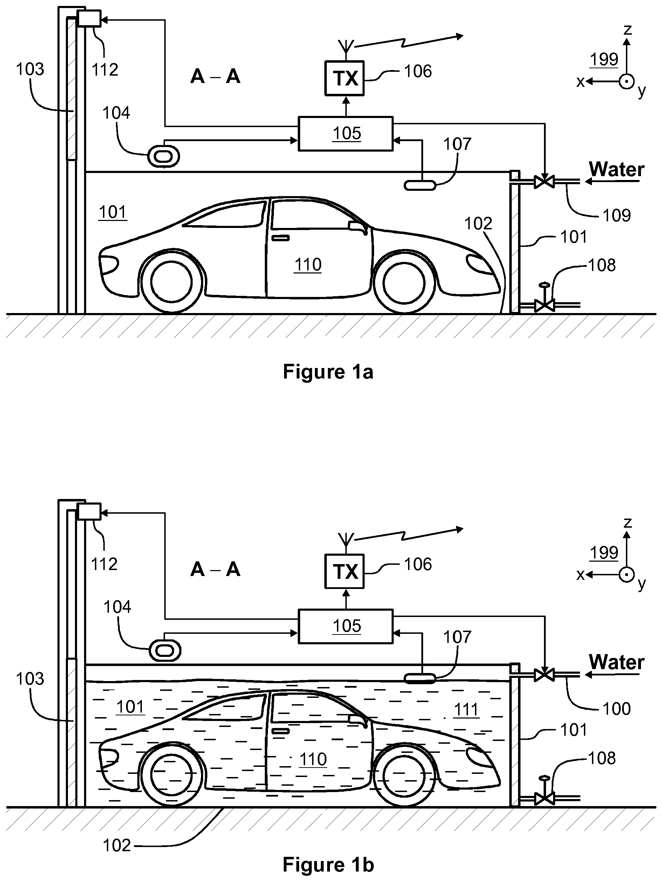

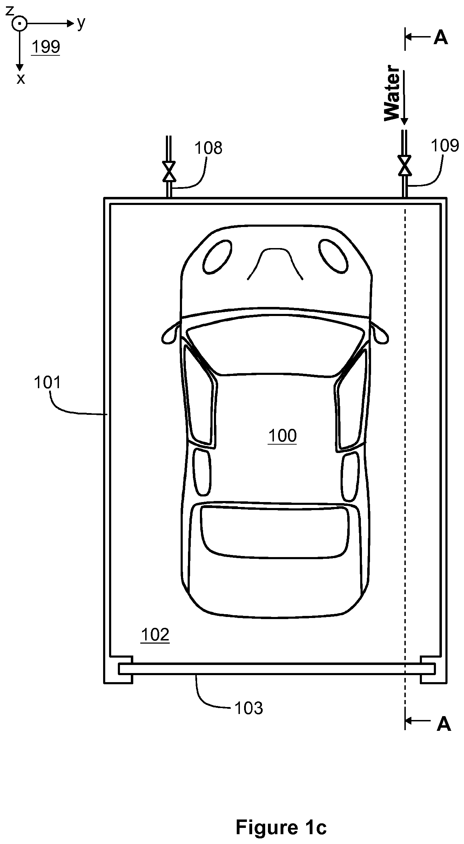

Figures 1a, 1b, and 1c illustrate an extinguishing system according to an exemplifying and non-limiting embodiment. Figures 1a and 1b show a section taken along a line A-A shown in figure 1c, wherein the geometric section plane is parallel with the xz-plane of a coordinate system 199. Figure 1c shows a top view of the extinguishing system. The extinguishing system comprises a wall section 101 for surrounding an object 110 on fire and a floor section 102 connected to the wall section and for supporting the object 110 on fire. The object 110 can be for example an electric or hybrid vehicle, e.g. a car, that comprises a battery. The wall section 101 and the floor section 102 constitute a pool for containing firefighting water covering at least partly the object 110 on fire. The wall section 101 comprises a guillotine door 103 configured to allow the object 110 to enter the pool when the guillotine door is in an upper position, and to seal the pool to be capable of containing the firefighting water when the guillotine door 103 is in a lower position. Figure 1a shows a situation in which the guillotine door 103 is in the upper position, and figure 1b shows a situation in which the guillotine door 103 is in the lower position and the pool contains firefighting water 111. The firefighting water 111 can be e.g. normal tap water available from hydrants, or the firefighting water may contain added chemicals for improving its ability to extinguish fire.

The extinguishing system can be e.g. a part of fixed structures of for example a parking hall or a ship such that the extinguishing system does not disturb normal operations when the guillotine door 103 is in its upper position. The guillotine door 103 is straightforward to set into its lower position just by releasing the guillotine door 103 to drop. Depending on a case, a parking hall as well as a ship may comprise a plurality of extinguishing systems of the kind described above.

The exemplifying extinguishing system illustrated in figures 1a-1c comprises a fire detector 104 and a control system 105 that is configured to release the guillotine door 103 to drop down and to activate a supply 109 of the firefighting water in response to detected fire. In figures 1a and 1b, the mechanism for releasing the guillotine door 103 is denoted with a reference 112. The fire detector 104 can be for example an optical fire detector responsive to smoke and/or vapors, a temperature detector responsive to heat, or some other suitable fire detector. In the exemplifying extinguishing system illustrated in figures 1a-1c, the control system 105 is configured to generate a fire alarm signal in response to the detected fire. In this exemplifying case, the fire alarm signal is a radio signal transmitted with a radio transmitter 106, but it is also possible that the fire alarm signal is an electric signal conducted in an electrical cable or an optical signal.

The exemplifying extinguishing system illustrated in figures 1a-1c comprises a water level detector 107 configured to deactivate the supply 109 of the firefighting water in response to a situation in which the level of the firefighting water inside the pool exceeds a predetermined limit. The water level detector 107 may comprise for example a float element that is movable by the firefighting water, or the water level detector 107 can be e.g. a capacitive water surface level sensor, or some other suitable water surface level sensor.

In the exemplifying extinguishing system illustrated in figures 1a-1c, a lower portion of the wall element 101 comprises an outlet valve 108 that is suitable for emptying the pool from the firefighting water after the fire has been extinguished. In a typical case, the used firefighting water may contain environmentally harmful substances and/or even poisonous substances. Thus, it is advantageous that the used firefighting water can be collected in a controlled way and thereby a situation in which the used firefighting water leaks out to the environment can be avoided. Thereafter, the used firefighting water is advantageously delivered to appropriate post processing, e.g. to a plant for toxic and dangerous waste treatment. Thus, the possibility to handle the used firefighting water in a controlled way is a clear advantage of the extinguishing system illustrated in figures 1a-1c.

In an extinguishing system according to an exemplifying and non-limiting embodiment, the control system 105 is configured to control a smoke and/or vapors removal system of a building, e.g. a parking hall, or a smoke and/or vapors removal system of a ship. Furthermore, the control system 105 can be configured to control another building automation system or a ship automation system.

An extinguishing system according to an exemplifying and non-limiting embodiment comprises a threshold element which is hinged to the floor and which can be turned into an upright position in a case of fire. When the threshold element is down, the threshold element does not disturb normal operations, i.e. the threshold element allows the object to enter the pool when the threshold element is down. The threshold element is advantageously provided with sealing elements so that the threshold element can be used for sealing the pool to contain firefighting water, or for improving the sealing provided by the guillotine door.

An extinguishing system according to an exemplifying and non-limiting embodiment comprises a water pipe that comprises permanent magnets at the end region of the water pipe. The permanent magnets can be used for attaching the end region of the water pipe to e.g. a bottom of an object, e.g. a bottom of a vehicle such as a car, or for attaching the end region of the water pipe to a floor when the floor comprises ferromagnetic material. In exemplifying cases where the floor is a deck of a ship, the floor typically comprises ferromagnetic material.

The control system 105 can be implemented with one or more processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the control system 105 may comprise one or more memory circuits each of which can be for example a random-access-memory "RAM" circuit.

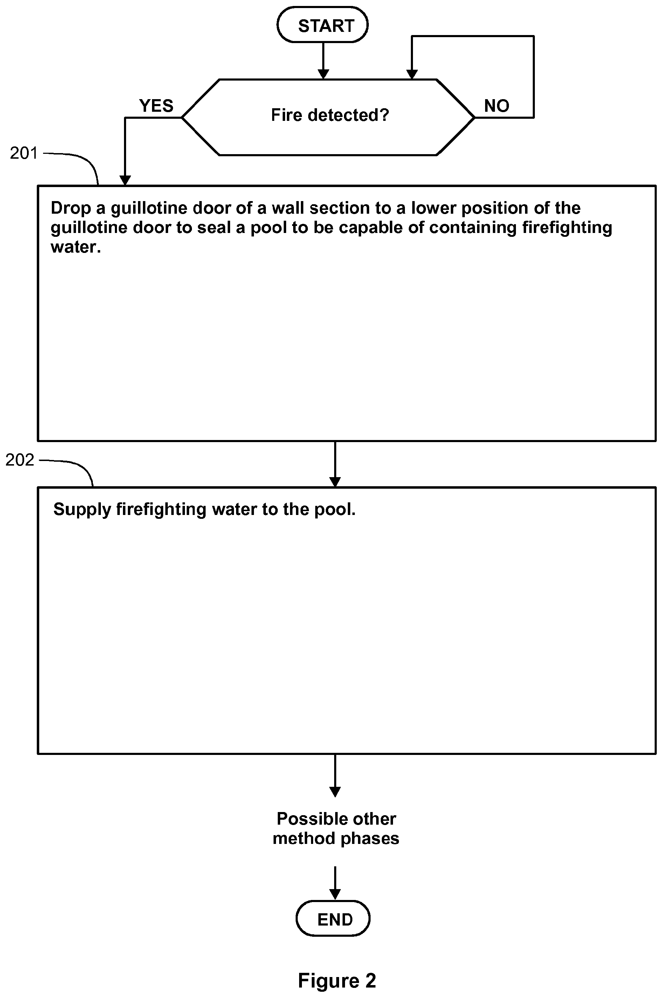

Figure 2 shows a flowchart of a method according to an exemplifying and non-limiting embodiment for extinguishing fire of an object located in a pool constituted by a wall section surrounding the object and a floor section supporting the object. The method comprises the following actions:
- action 201: dropping a guillotine door of the wall section to a lower position of the guillotine door to seal the pool to be capable of containing firefighting water, and
- action 202: supplying the firefighting water to the pool.

In a method according to an exemplifying and non-limiting embodiment, the object is a vehicle e.g. a car that can be e.g. an electric or hybrid vehicle comprising a battery.

A method according to an exemplifying and non-limiting embodiment comprises releasing the guillotine door to drop down and activating a supply of firefighting water in response to fire detected by a fire detector.

A method according to an exemplifying and non-limiting embodiment comprises generating a fire alarm signal, e.g. a radio signal, in response to fire detected by the fire detector.

A method according to an exemplifying and non-limiting embodiment comprises monitoring a level of the firefighting water inside the pool with a water level detector and deactivating a supply of the firefighting water in response to a situation in which the level of the firefighting water exceeds a predetermined limit.

A method according to an exemplifying and non-limiting embodiment comprises emptying the pool from the firefighting water via an outlet valve after the fire has been extinguished.

The specific examples provided in the description given above should not be construed as limiting the applicability and/or interpretation of the appended claims. It is to be noted that lists and groups of examples given in this document are nonexhaustive lists and groups unless otherwise explicitly stated.

## Claims

1. An extinguishing system comprising a wall section (101) for surrounding an object on fire and a floor section (102) connected to the wall section and for supporting the object on fire, the wall section and the floor section constituting a pool for containing firefighting water covering at least partly the object on fire, **characterized in that** the wall section comprises a guillotine door (103) configured to allow the object to enter the pool when the guillotine door is in an upper position and to seal the pool to be capable of containing the firefighting water when the guillotine door is in a lower position.

2. An extinguishing system according to claim 1, wherein the extinguishing system comprises a fire detector (104) and a control system (105) configured to release the guillotine door to drop down and to activate a supply (109) of the firefighting water in response to detected fire.

3. An extinguishing system according to claim 2, wherein the control system (105) is configured to generate a fire alarm signal in response to the detected fire.

4. An extinguishing system according to any one of claims 1-3, wherein the extinguishing system comprises a water level detector (107) configured to deactivate a supply (109) of the firefighting water in response to a situation in which a level of the firefighting water inside the pool exceeds a predetermined limit.

5. An extinguishing system according to any one of claims 1-4, wherein a lower portion of the wall section comprises an outlet valve (108) for emptying the pool from the firefighting water.

6. A method for extinguishing fire of an object located in a pool constituted by a wall section surrounding the object and a floor section supporting the object, **characterized in that** the method comprises:
- dropping (201) a guillotine door of the wall section to a lower position of the guillotine door to seal the pool to be capable of containing firefighting water, and
- supplying (202) the firefighting water to the pool.

7. A method according to claim 6, wherein the object is a vehicle.

8. A method according to claim 7, wherein the vehicle is an electric or hybrid vehicle comprising a battery.

9. A method according to any one of claims 6-8, wherein the method comprises releasing the guillotine door to drop down and activating a supply of the firefighting water in response to fire detected by a fire detector.

10. A method according to claim 9, wherein the method comprises generating a fire alarm signal in response to the fire detected by the fire detector.

11. A method according to any one of claims 6-10, wherein the method comprises monitoring a level of the firefighting water inside the pool with a water level detector and deactivating a supply of the firefighting water in response to a situation in which the level of the firefighting water exceeds a predetermined limit.

12. A method according to any one of claims 6-11, wherein the method comprises emptying the pool from the firefighting water via an outlet valve after the fire has been extinguished.

## Patentansprüche

1. Löschsystem, das einen Wandabschnitt (101) zum Umgeben eines brennenden Objekts und einen Bodenabschnitt (102), der mit dem Wandabschnitt verbunden ist und das brennende Objekt trägt, umfasst, wobei der Wandabschnitt und der Bodenabschnitt ein Becken zum Aufnehmen von Brandlöschwasser bilden, das das brennende Objekt mindestens teilweise bedeckt, **dadurch gekennzeichnet, dass** der Wandabschnitt eine Falltür (103) umfasst, die dazu konfiguriert ist, es dem Objekt zu erlauben, in das Becken einzutreten, wenn die Falltür in einer oberen Position ist, und das Becken abzudichten, so dass es in der Lage ist, das Brandlöschwasser zu enthalten, wenn sich die Falltür in einer unteren Position befindet.

2. Löschsystem nach Anspruch 1, wobei das Löschsystem einen Brandmelder (104) und ein Steuersystem (105) umfasst, das dazu konfiguriert ist, die Falltür zum Senken freizugeben und eine Zufuhr (109) des Brandlöschwassers als Reaktion auf erfassten Brand zu aktivieren.

3. Löschsystem nach Anspruch 2, wobei das Steuersystem (105) dazu konfiguriert ist, ein Brandmeldesignal als Reaktion auf den erfassten Brand zu erzeugen.

4. Löschsystem nach einem der Ansprüche 1-3, wobei das Löschsystem einen Wasserstandsdetektor (107) umfasst, der dazu konfiguriert ist, die Versorgung (109) mit Brandlöschwasser als Reaktion auf eine Situation zu deaktivieren, in der der Füllstand des Brandlöschwassers in dem Becken ein vorbestimmtes Limit überschreitet.

5. Löschsystem nach einem der Ansprüche 1-4, wobei ein unterer Teil des Wandabschnitts ein Auslassventil (108) zum Entleeren des Brandlöschwassers aus dem Becken umfasst.

6. Verfahren zum Löschen des Brands eines Objekts, das sich in einem Becken befindet, das aus einem Wandabschnitt, der das Objekt umgibt, und einem Bodenabschnitt, der das Objekt trägt, gebildet ist, **dadurch gekennzeichnet, dass** das Verfahren Folgendes umfasst:
- Senken (201) einer Falltür des Wandabschnitts zu einer unteren Position der Falltür, um das Becken abzudichten, so dass es in der Lage ist, Brandlöschwasser zu enthalten, und
- Zuführen (202) des Brandlöschwassers in das Becken.

7. Verfahren nach Anspruch 6, wobei das Objekt ein Fahrzeug ist.

8. Verfahren nach Anspruch 7, wobei das Fahrzeug ein Elektro- oder Hybridfahrzeug, das eine Batterie umfasst, ist.

9. Verfahren nach einem der Ansprüche 6-8, wobei das Verfahren das Freigeben der Falltür zum Senken und das Aktivieren einer Zuführung von Brandlöschwasser als Reaktion auf einen Brand, der von einem Brandmelder erfasst wird, umfasst.

10. Verfahren nach Anspruch 9, wobei das Verfahren das Erzeugen eines Brandmeldesignals als Reaktion auf das Erfassen des Brands durch den Brandmelder umfasst.

11. Verfahren nach einem der Ansprüche 6-10, wobei das Verfahren das Überwachen eines Füllstands des Brandlöschwassers in dem Becken mit einem Wasserstandsdetektor und das Deaktivieren einer Zuführung des Brandlöschwassers als Reaktion auf eine Situation, in der der Füllstand des Brandlöschwassers ein vorbestimmtes Limit überschreitet, umfasst.

12. Verfahren nach einem der Ansprüche 6-11, wobei das Verfahren das Entleeren des Brandlöschwasser aus dem Becken über ein Auslassventil, nachdem der Brand gelöscht wurde, umfasst.

## Revendications

1. Système d'extinction comprenant une paroi (101) destinée à entourer un objet en feu et un plancher (102) raccordé à la paroi et supportant l'objet en feu, la paroi et le plancher constituant un bassin destiné à contenir l'eau d'extinction recouvrant au moins partiellement l'objet en feu, **caractérisé en ce que** la paroi comprend une porte guillotine (103) configurée pour permettre à l'objet d'entrer dans le bassin lorsque la porte guillotine est dans une position haute et pour sceller le bassin afin de contenir l'eau d'extinction lorsque la porte guillotine est dans une position basse.

2. Système d'extinction selon la revendication 1, dans lequel le système d'extinction comprend un détecteur d'incendie (104) et un système de commande (105) configuré pour actionner l'abaissement de la porte guillotine et déclencher une alimentation (109) en eau d'extinction en réponse à une détection d'incendie.

3. Système d'extinction selon la revendication 2, dans lequel le système de commande (105) est configuré pour générer un signal d'alarme incendie en réponse à la détection d'un incendie.

4. Système d'extinction selon une quelconque des revendications 1 à 3, dans lequel le système d'extinction comprend un détecteur de niveau d'eau (107) configuré pour couper une alimentation (109) en eau d'extinction en réponse à une situation dans laquelle un niveau d'eau d'extinction dans le bassin dépasse une limite prédéterminée.

5. Système d'extinction selon une quelconque des revendications 1 à 4, dans lequel la partie inférieure de la paroi comprend une vanne de vidange (108) permettant de vider le bassin de l'eau d'extinction.

6. Procédé d'extinction d'incendie d'un objet situé dans un bassin constitué d'une paroi entourant l'objet et d'un plancher supportant l'objet, **caractérisé en ce que** le procédé comprend :
- l'abaissement (201) d'une porte guillotine de la paroi afin de sceller le bassin pour permettre le confinement de l'eau d'extinction et
- l'alimentation (202) du bassin en eau d'extinction.

7. Procédé selon la revendication 6, dans lequel l'objet est un véhicule.

8. Procédé selon la revendication 7, dans lequel le véhicule est un véhicule électrique ou hybride équipé d'une batterie.

9. Procédé selon une quelconque des revendications 6 à 8, dans lequel le procédé comprend l'abaissement de la porte guillotine et l'activation de l'alimentation en eau d'extinction en réponse à la détection d'un incendie par un détecteur d'incendie.

10. Procédé selon la revendication 9, **caractérisé en ce qu'**il consiste à générer un signal d'alarme incendie en réponse à l'incendie détecté par le détecteur d'incendie.

11. Procédé selon une quelconque des revendications 6 à 10, **caractérisé en ce qu'**il consiste à surveiller un niveau d'eau d'extinction dans le bassin à l'aide d'un détecteur de niveau d'eau et à couper une alimentation en eau d'extinction en réponse à une situation dans laquelle le niveau d'eau d'extinction dépasse une limite prédéterminée.

12. Procédé selon une quelconque des revendications 6 à 11, **caractérisé en ce que** le procédé consiste à vider le bassin de l'eau d'extinction via une vanne de vidange après l'extinction de l'incendie.
